# EUROPÄISCHE PATENTSCHRIFT

(11) **EP 1 510 239 B1**
(45) Veröffentlichungstag und Bekanntmachung des Hinweises auf die Patenterteilung: **19.11.2008**
(21) Anmeldenummer: 04104020.5
(22) Anmeldetag: 20.08.2004
(51) Int. Cl.: B01D 27/08

(54) **Filtereinrichtung zur Flüssigkeitsfilterung**
Liquid filter device
Dispositif de filtration de liquide

(30) Priorität: 30.08.2003 DE 10340123
(43) Veröffentlichungstag der Anmeldung: 02.03.2005
(73) Patentinhaber: MANN+HUMMEL GmbH, 71638 Ludwigsburg (DE)
(72) Erfinder: Jokschas, Günter, 71540 Murrhardt (DE); Reyinger, Jochen, 70188 Stuttgart (DE)

(56) Entgegenhaltungen:
- US-A- 4 842 737
- PATENT ABSTRACTS OF JAPAN Bd. 0110, Nr. 24 (C-399), 23. Januar 1987 (1987-01-23) -& JP 61 197013 A (MATSUSHITA ELECTRIC WORKS LTD), 1. September 1986 (1986-09-01)

## Beschreibung

Die Erfindung bezieht sich auf eine Filtereinrichtung zur Flüssigkeitsfilterung nach dem Oberbegriff des Anspruches 1.

In der Druckschrift JP 61197013A wird eine Filtereinrichtung mit einem außerhalb des Strömungsweges, getrennt vom Filterelement angeordneten, verformbaren oder aufgrund von Überdruck berstenden Ausgleichselement beschrieben, bei dessen Verformung das Volumen zumindest eines Abschnittes des Strömungsweges der zu filternden Flüssigkeit im Filtergehäuse änderbar ist. Dieses verhindert ein Bersten des Filterelements bei Überdruck und gefrierendem Medium.

In der Druckschrift DE 197 46 752 A1 wird ein Öl- bzw. Kraftstofffilter beschrieben, der in einem Filtergehäuse einen zylindrischen Filtereinsatz aufweist, welcher radial von außen nach innen von dem zu reinigenden Medium durchströmt wird. Nach der Filterung wird das gereinigte Medium axial aus dem Innenraum des Filtereinsatzes abgeleitet. Um sicherzustellen, dass Roh- und Reinseite des Filtereinsatzes flüssigkeits- und druckdicht separiert sind, sind zur Verhinderung von Fehlströmen die axialen Stirnseiten des Filtereinsatzes mit Endscheiben abgedichtet, wobei in die stirnseitige, zentrale Ausnehmung des Filtereinsatzes jeweils ein Dichtring eingesetzt ist, über den eine Abdichtung zwischen Filtereinsatz und angrenzendem Gehäuse erreicht wird.

Die in der DE 197 46 752 A1 gezeigte Filtereinrichtung eignet sich insbesondere für eine radiale Zufuhr des zu reinigenden Mediums in das Filtergehäuse, da die in die Stirnseite eingesetzten Dichtringe eine axiale Zufuhr des Mediums unmöglich machen, weil das Medium unmittelbar in den Reinraum des Filterelementes eintreten würde.

Eine axiale Zufuhr des Mediums kann andererseits aus konstruktiven Gründen Vorteile bringen, da sich die Filtereinrichtung besonders leicht in einen Rohrstrang integrieren lässt. In diesem Fall muss aber die axiale Stirnseite des Filterelements mit einem Deckel flüssigkeitsdicht versiegelt werden, woraufhin das in das Filtergehäuse eingeleitete und zu reinigende Medium an dem stirnseitigen Deckel des Filterelementes vorbei in einen radial das Filterelement umgreifenden Ringraum einströmt und von dort radial von außen nach innen durch das Filtermaterial hindurchströmt.

Probleme können jedoch auftreten, wenn das zu reinigende Medium einen verhältnismäßig hohen Gefrierpunkt aufweist. Bei kalten Außentemperaturen kann das in das Filtergehäuse axial eingeleitete, flüssige Medium gefrieren, wobei aufgrund der beim Gefrieren erfolgenden Ausdehnung des Mediums der Deckel und damit auch das gesamte Filterelement zerstört werden können.

Der Erfindung liegt das Problem zugrunde, eine Filtereinrichtung zur Flüssigkeitsfilterung in der Weise auszubilden, dass bei einem Gefrieren des zu reinigenden Mediums eine Beschädigung der Filtereinrichtung vermieden wird.

Dieses Problem wird erfindungsgemäß mit den Merkmalen des Anspruches 1 gelöst. Die Unteransprüche geben zweckmäßige Weiterbildungen an.

Bei der erfindungsgemäßen Filtereinrichtung befindet sich im Filtergehäuse ein elastisch verformbares Ausdehnungselement, bei dessen Verformung das Volumen zumindest eines Abschnitts des Strömungswegs der zu reinigenden Flüssigkeit beeinflusst wird. Dieses Ausdehnungselement kann unter dem Druck der Flüssigkeit elastisch nachgeben, wodurch der Raum innerhalb des Filtergehäuses auf derjenigen Seite des Filterelementes, die in Kontakt mit der Flüssigkeit steht, vergrößert werden kann. Insbesondere für den Fall, dass das zugeleitete Medium bei tiefen Temperaturen gefriert und sich hierbei ausdehnt, sorgt das Ausdehnungselement durch seine Verformbarkeit für eine Vergrößerung des zur Verfügung stehenden Volumens, so dass die beim Gefrierprozess auftretenden sehr hohen Kräfte nicht unmittelbar auf das Filterelement geleitet werden und auch nicht zu einer Zerstörung des Filterelementes führen können. Die Verformbarkeit des Ausdehnungselements verhindert eine unzulässig hohe Kraftübertragung auf das Filterelement. Auch das Filtergehäuse wird durch das Ausdehnungselement vor unzulässig hohen Kräften geschützt, die zu einer Zerstörung und zu Undichtigkeit des Filtergehäuses führen könnten.

Das Ausdehnungselement kann sowohl im Bereich der Rohseite als auch im Bereich der Reinseite des Filterelements angeordnet sein. Gemäß einer zweckmäßigen Weiterbildung ist das Ausdehnungselement auf der der Zuströmöffnung im Filtergehäuse zugewandten Seite des Filterelementes angeordnet. Eine Vereisung des in das Gehäuse eingeleiteten Mediums bewirkt in dieser Ausführung eine Absperrung des Strömungskanals zwischen der Eintrittsseite in das Filtergehäuse und der direkten Anströmseite auf das Filterelement, wodurch das üblicherweise auf mechanische Kräfte empfindlich reagierende Filtermaterial vor unmittelbarem Kontakt mit gefrierendem Medium geschützt ist. Der Zufluss zur Rohseite wird unterbrochen.

Möglich sind sowohl Ausführungen, in denen das Ausdehnungselement einen Abschnitt des Strömungswegs der zu reinigenden Flüssigkeit unmittelbar begrenzt und sich unter dem Flüssigkeitsoder Vereisungsdruck verformt, als auch Ausführungen, in denen das Ausdehnungselement außerhalb des Strömungswegs der zu reinigenden Flüssigkeit liegt und somit nicht in unmittelbaren Kontakt mit der Flüssigkeit gelangt. Insbesondere im letzteren Fall stützt sich das Filterelement über das Ausdehnungselement am Filtergehäuse ab, so dass beispielsweise im Fall einer Vereisung der Flüssigkeit das Filterelement sich aufgrund der Verformbarkeit des Ausdehnungselements verschieben lässt, wodurch unzulässig hohe Kräfte auf das Filterelement vermieden werden.

Das elastisch verformbare Ausdehnungselement besteht zweckmäßig aus Gummi, insbesondere aus einem Elastomer wie beispielsweise EPDM, wobei sich eine Shorehärte von 50 ± 10 als vorteilhaft erwiesen hat. Desweiteren kommt als Material auch ein Moosgummi in Betracht.

Das Ausdehnungselement eignet sich besonders vorteilhaft als stirnseitiger Deckel eines zylindrischen Filterelementes, welches radial von dem zu reinigenden Medium durchströmt wird. Zumindest auf der der Zuströmöffnung benachbarten Stirnseite sitzt das elastische Ausdehnungselement auf und separiert die Roh- von der Reinseite. Diese Ausführung lässt sich besonders gut mit einer axialen Zuströmung des zu reinigenden Mediums in das Filtergehäuse kombinieren.

Die Filtereinrichtung eignet sich in einer bevorzugten Ausführung zur Filterung wässriger Harnstofflösungen, welche für die Reduktion der Stickoxidemissionen im Abgasstrang einer Brennkraftmaschine verwendet werden. Aus der wässrigen Harnstofflösung wird im Wege einer thermohydrolytischen Aufspaltung Ammoniak abgegeben, welches mittels Eindüsens dem Abgasstrom beigemengt wird und zu einer Reduktion der im Abgas enthaltenen Stickoxide zu Stickstoff und Wasser führt.

Alternativ ist aber auch eine Anwendung als Kraftstofffilter oder Ölfilter oder eine Filterung sonstiger Flüssigkeiten, insbesondere in Kraftfahrzeugen, möglich.

Weitere Vorteile und zweckmäßige Ausführungen sind den weiteren Ansprüchen, der Figurenbeschreibung und den Zeichnungen zu entnehmen. Es zeigen:
- Fig. 1: eine Filtereinrichtung in einem Teil-Längsschnitt,
- Fig. 2: eine Filtereinrichtung in einer alternativen Ausführung im Längsschnitt.

In den Zeichnungen sind gleich Bauteile mit gleichen Bezugszeichen versehen.

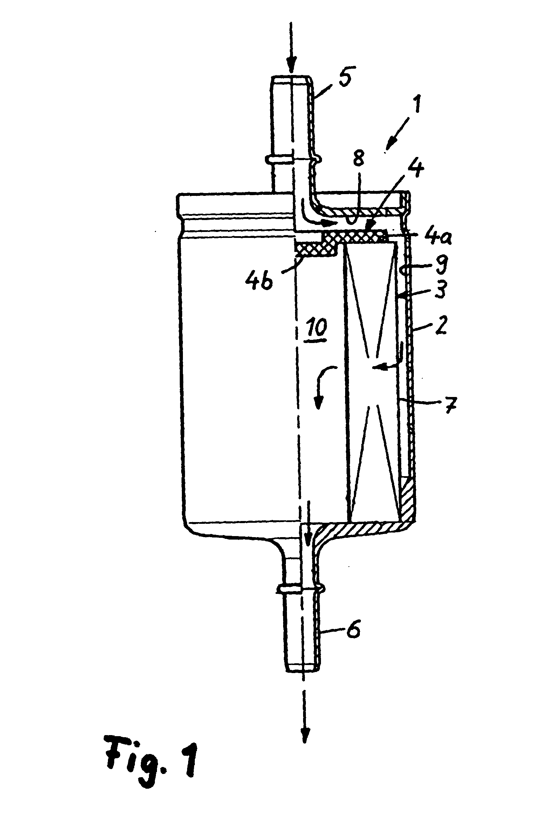

Die in Fig. 1 dargestellte Filtereinrichtung 1 besteht aus einem etwa zylindrischen Filtergehäuse 2, in das das zu reinigende Medium axial in Pfeilrichtung über die axiale Zuströmöffnung 5 eingeführt und aus dem das gereinigte Medium auf der gegenüberliegenden Stirnseite über die axiale Abströmöffnung 6 in Pfeilrichtung abgeführt wird. Als zu reinigendes Medium können verschiedenartige Flüssigkeiten wie wässrige Harnstofflösung, Kraftstoffe, Öl oder dergleichen verwendet werden.

Im Filtergehäuse 2 befindet sich ein ebenfalls zylindrisches Filterelement 3 mit einem ringförmigen Filtermaterial 7, das radial von außen nach innen von der zu reinigenden Flüssigkeit durchströmt wird. Dementsprechend befindet sich die Rohseite auf der radialen Außenseite und die Reinseite im zylindrischen Innenraum des Filterelementes 3. Das Filterelement ist zweckmäßig als Wechselfilterelement ausgebildet.

Die axial über die Zuströmöffnung 5 zuzuführende Flüssigkeit gelangt im Filtergehäuse 2 zunächst in einen stirnseitigen Einströmraum 8, welcher zwischen einer der Stirnseiten des Filterelementes 3 und der benachbarten Innenwandung des Filtergehäuses 2 gebildet ist. Aus dem stirnseitigen Einströmraum 8 kann die eingeleitete Flüssigkeit in einen äußeren, die Rohseite bildenden Ringraum 9 einfließen, der zwischen der zylindrischen Innenwandung des Filtergehäuses und der zylindrischen Mantelfläche des Filterelementes gebildet ist. Nach dem radialen Durchströmen des Filtermaterials 7 wird das gereinigte Medium axial über die Abströmöffnung 6 aus dem die Reinseite bildenden, zylindrischen Innenraum des Filterelementes 3 ausgeleitet.

Die den Einströmraum 8 begrenzende Stirnseite des Filterelementes 3 ist von einem Deckel 4 verschlossen, welcher die Rohseite von der Reinseite des Filterelementes separiert. Der Deckel 4 bildet ein Ausdehnungselement, das elastisch verformbar ausgebildet ist. Der Deckel 4 besitzt einen äußeren Ringabschnitt 4a, der auf der Stirnseite des ringförmigen Filtermaterials 7 aufliegt, sowie einen hiervon axial abgesetzten, zentrischen Absatz 4b, der in den Innenraum 10 des Filterelementes 3 einragt. Der axial versetzte Absatz 4b ermöglicht eine vereinfachte Montage und Zentrierung des Deckels 4 auf die Stirnseite des Filterelementes 3.

Die Elastizität des Deckels 4 erlaubt eine elastische Verformung und Nachgiebigkeit bei einem erhöhten Druck im Einströmraum 8, beispielsweise im Falle des Gefrierens der einströmenden Flüssigkeit. Die durch die axial in Richtung des Innenraumes 10 erfolgende Verformung des Deckels 4 vergrößert das Volumen des Einströmraumes 8, wodurch insbesondere im Falle von Gefrieren der eintretenden Flüssigkeit die beim Gefrierprozess ausgelöste Volumenvergrößerung des Mediums kompensiert werden kann und unzulässig hohe Kräfte auf das Filterelement vermieden werden können. Zudem wird beim Gefrieren des Mediums im axialen, stirnseitigen Einströmraum 8 auch der Zufluss zu dem äußeren Ringraum 9 verschlossen, wodurch ein unmittelbarer Kontakt gefrierender Flüssigkeit mit dem Filtermaterial 7 im Bereich der Rohseite vermieden oder zumindest reduziert wird.

Als Material für den Deckel 4 kann Gummi, beispielsweise ein aus EPDM bestehendes Elastomer verwendet werden, dessen Shorehärte insbesondere etwa 50 ± 10 beträgt. Dieses Material ermöglicht eine Volumenvergrößerung des Einströmraumes 8 um etwa 10 % ohne Gefahr einer Undichtigkeit zwischen Roh- und Reinseite des Filterelementes.

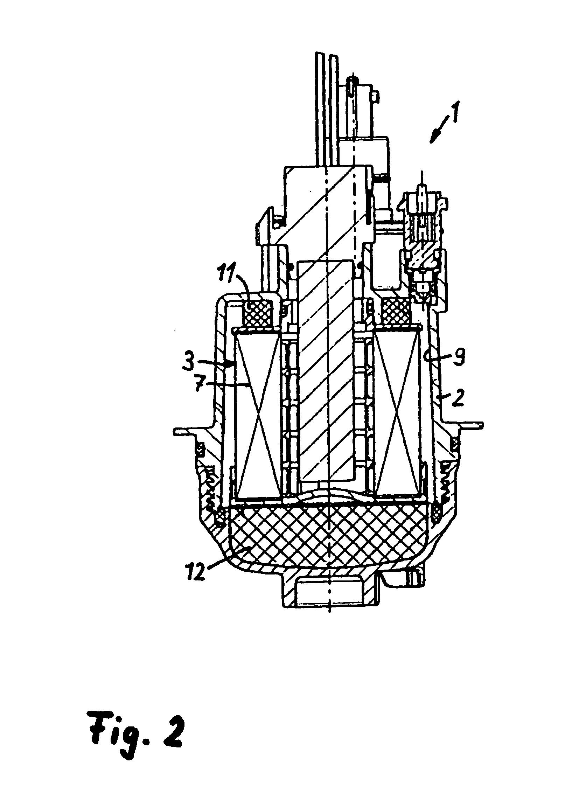

Auch im Ausführungsbeispiel nach Fig. 2 ist in das etwa zylinderförmige Filtergehäuse 2 ein zylindrisches Filterelement 3 eingesetzt, das radial von außen von der zu reinigenden Flüssigkeit angeströmt und axial aus dem Filterelement abgeleitet wird. Das Filterelement 3 ist im Bereich beider axialer Stirnseiten über Ausdehnungselemente axial, gegebenenfalls auch radial gegenüber dem Filtergehäuse 2 abgestützt. Das Ausdehnungselement an der oberen Stirnseite des Filterelements 3 ist als Ring 11, das Ausdehnungselement an der unteren Stirnseite als Bodenscheibe 12 ausgeführt.

Der Ringraum 9 zwischen der Innenwandung des Filtergehäuses 2 und der Mantelfläche des Filterelementes 3 bildet die Anström- bzw. Rohseite des Filters. Bei Eintritt der zu reinigenden Flüssigkeit in den Ringraum 9 kann das Filterelement 3 unter dem auftretenden Flüssigkeitsdruck nachgeben, wodurch sich das Volumen des Ringraumes 9 vergrößert und auf das Filterelement 3 wirkende Kräfte reduziert oder eliminiert werden. Insbesondere bei einer Vereisung der im Ringraum 9 befindlichen Flüssigkeit und dadurch bedingter Ausdehnung des im Ringraum befindlichen Mediums kann das Filterelement 3 aufgrund der Lagerung über die Ausdehnungselemente 11 und 12 im Boden- bzw. Deckelbereich des Filterelements nachgeben, so dass das Filtermaterial 7 nicht zerstört wird.

## Patentansprüche

1. Filtereinrichtung zur Flüssigkeitsfilterung, mit einem in einem Filtergehäuse (2) angeordneten, von der zu filternden Flüssigkeit durchströmten Filterelement (3),
**dadurch gekennzeichnet,**
**dass** im Filtergehäuse (2) unmittelbar auf mindestens einer Stirnseite des Filterelements (3) ein verformbares Ausgleichselement (Deckel 4, Ring 11, Bodenscheibe 12) angeordnet ist, bei dessen verformung das Volumen zumindest eines Abschnittes des Strömungsweges der zu filternden Flüssigkeit im Filtergehäuse (2) änderbar ist.

2. Filtereinrichtung nach Anspruch 1,
**dadurch gekennzeichnet,**
**dass** das Ausdehnungselement (Deckel 4) auf der der Zuströmöffnung (5) im Filtergehäuse (2) zugewandten Seite des Filterelements (3) angeordnet ist.

3. Filtereinrichtung nach Anspruch 1 oder 2,
**dadurch gekennzeichnet,**
**dass** auf gegenüberliegenden Seiten des Filterelements (3) jeweils ein Ausdehnungselement (Ring 11, Bodenscheibe 12) angeordnet ist.

4. Filtereinrichtung nach einem der Ansprüche 1 bis 3,
**dadurch gekennzeichnet,**
**dass** das Ausdehnungselement (Deckel 4) einen Abschnitt des Strömungswegs der zu reinigenden Flüssigkeit unmittelbar begrenzt.

5. Filtereinrichtung nach einem der Ansprüche 1 bis 4,
**dadurch gekennzeichnet,**
**dass** das Ausdehnungselement (Ring 11, Bodenscheibe 12) außerhalb des Strömungswegs der zu reinigenden Flüssigkeit liegt.

6. Filtereinrichtung nach einem der Ansprüche 1 bis 5,
**dadurch gekennzeichnet,**
**dass** das Filterelement (3) über das Ausdehnungselement (Ring 11, Bodenscheibe 12) am Filtergehäuse (2) abgestützt ist.

7. Filtereinrichtung nach einem der Ansprüche 1 bis 6,
**dadurch gekennzeichnet,**
**dass** das Ausdehnungselement (Deckel 4, Ring 11, Bodenscheibe 12) als eine aus einem Elastomer bestehende Gummischeibe ausgeführt ist.

8. Filtereinrichtung nach Anspruch 7,
**dadurch gekennzeichnet,**
**dass** das Elastomer ein Ethylen-Propylen-Dien-Copolymer (EPDM) ist.

9. Filtereinrichtung nach einem der Ansprüche 1 bis 8,
**dadurch gekennzeichnet,**
**dass** die Shorehärte des Ausdehnungselements (Deckel 4, Ring 11, Bodenscheibe 12) 50 ± 10 beträgt.

10. Filtereinrichtung nach einem der Ansprüche 1 bis 9,
**dadurch gekennzeichnet,**
**dass** das Filterelement (3) zylindrisch ausgebildet ist und das Ausdehnungselement einen auf die Stirnseite des Filterelements (3) aufgesetzten Deckel (4) bildet.

11. Filtereinrichtung nach Anspruch 10,
**dadurch gekennzeichnet,**
**dass** der elastische Deckel (4) einen axial versetzten, zentrischen Absatz (4b) aufweist, der in eine zylindrische Öffnung im Filterelement (3) einragt.

12. Verwendung der Filtereinrichtung nach einem der Ansprüche 1 bis 11 zur Filterung wässriger Harnstofflösungen für die NOₓ-Reinigung im Abgasstrang einer Brennkraftmaschine.

13. Verwendung der Filtereinrichtung nach einem der Ansprüche 1 bis 11 zur Ölfilterung.

## Claims

1. Filtering device for filtering liquids, with a filter element (3) located in a filter housing (2) and flown through by the liquid to be filtered,
**characterized in**
**that** in the filter housing (2) a deformable compensating element (cover 4, ring 11, bottom disk 12) is arranged directly at at least one front end of the filter element (3), the deformation of which can change the volume of at least one section of the flow path of the liquid to be filtered in the filter housing (2).

2. Filtering device according to claim 1,
**characterized in**
**that** the expansion element (cover 4) is located at the side of the filter element (3) that faces the intake opening (5) in the filter housing (2).

3. Filtering device according to claim 1 or 2,
**characterized in**
**that** at the opposite sides of the filter element (3) an expansion element each (ring 11, bottom disk 12) is located.

4. Filtering device according to one of the claims 1 to 3.
**characterized in**
**that** the expansion element (cover 4) directly defines a section of the flow path of the liquid to be cleaned.

5. Filtering device according to one of the claims 1 to 4.
**characterized in**
**that** the expansion element (ring 11, bottom disk 12) is located outside the flow path of the liquid to be cleaned.

6. Filtering device according to one of the claims 1 to 5,
**characterized in**
**that** the filter element (3) is supported at the filter housing (2) by means of the expansion element (ring 11, bottom disk 12).

7. Filtering device according to one of the claims 1 to 6,
**characterized in**
**that** the expansion element (cover 4, ring 11, bottom disk 12) is designed as rubber disk made of an elastomer.

8. Filtering device according to claim 7,
**characterized in**
**that** the elastomer is an ethylene-propylene-diene-copolymer (EPDM).

9. Filtering device according to one of the claims 1 to 8,
**characterized in**
**that** the Shore hardness of the expansion element (cover 4, ring 11, bottom disk 12) is 50 ± 10.

10. Filtering device according to one of the claims 1 to 9,
**characterized in**
**that** the filter element (3) has a cylindrical shape and the expansion element forms a cover (4) placed onto the front side of the filter element (3).

11. Filtering device according to claim 10,
**characterized in**
**that** the elastic cover (4) features an axially offset protrusion (4b) which projects into a cylindrical opening in the filter element (3).

12. Utilization of the filtering device according to one of the claims 1 to 11 for filtering aqueous urea solutions for the NOₓ cleaning in the exhaust gas system of an internal combustion engine.

13. Utilization of the filtering device according to one of the claims 1 to 11 for filtering oil.

## Revendications

1. Dispositif de filtration pour filtrer du liquide, muni d'un élément filtrant (3) placé dans un boîtier de filtre (2) et traversé par le liquide à filtrer.
**caractérisé en ce**
**que** dans le boîtier de filtre (2) un élément de compensation déformable (couvercle 4, anneau 11, disque de fond 12) est placé directement sur au moins une face frontale de l'élément filtrant (3) dont la déformation permet de modifier le volume d'au moins d'une section du trajet du flux du liquide à filtrer dans le boîtier de filtre (2).

2. Dispositif de filtration selon la revendication 1,
**caractérisé en ce**
**que** l'élément d'expansion (couvercle 4) est agencé sur le côté de l'élément filtrant (3) tourné vers l'ouverture d'entrée (5) dans le boîtier de filtre (2).

3. Dispositif de filtration selon la revendication 1 ou 2,
**caractérisé en ce**
**qu'**un élément d'expansion (anneau 11, disque de fond 12) est agencé sur les côtés opposés de l'élément filtrant (3).

4. Dispositif de filtration selon l'une quelconque des revendications 1 à 3,
**caractérisé en ce**
**que** l'élément d'expansion (couvercle 4) défini directement une section du trajet du flux du liquide à nettoyer.

5. Dispositif de filtration selon l'une quelconque des revendications 1 à 4,
**caractérisé en ce**
**que** l'élément d'expansion (anneau 11, disque de fond 12) est placé en dehors du trajet du flux du liquide à nettoyer.

6. Dispositif de filtration selon l'une quelconque des revendications 1 à 5,
**caractérisé en ce**
**que** l'élément filtrant (3) est supporté par le boîtier de filtre (2) à l'aide de l'élément d'expansion (anneau 11, disque de fond 12).

7. Dispositif de filtration selon l'une quelconque des revendications 1 à 6,
**caractérisé en ce**
**que** l'élément d'expansion (couvercle 4, anneau 11, disque de fond 12) est réalisé sous forme d'un disque en caoutchouc composé d'un élastomère.

8. Dispositif de filtration selon la revendication 7,
**caractérisé en ce**
**que** l'élastomère est un copolymère diénique d'éthylène-propylène (EPDM).

9. Dispositif de filtration selon l'une quelconque des revendications 1 à 8,
**caractérisé en ce**
**que** la dureté shore de l'élément d'expansion (couvercle 4, anneau 11, disque de fond 12) s'élève à 50 ± 10.

10. Dispositif de filtration selon l'une quelconque des revendications 1 à 9,
**caractérisé en ce**
**que** l'élément filtrant (3) est de forme cylindrique et l'élément d'expansion forme un couvercle (4) placé sur la face frontale de l'élément filtrant (3).

11. Dispositif de filtration selon la revendication 10,
**caractérisé en ce**
**que** le couvercle élastique (4) présente un épaulement centré (4b) désaxé axialement qui se prolonge dans une ouverture cylindrique de l'élément filtrant (3).

12. Utilisation du dispositif de filtration selon l'une quelconque des revendications 1 à 11 pour filtrer des solutions aqueuses d'acide urique pour le nettoyage des NOₓ dans la ligne des tuyaux d'échappement d'un moteur à combustion interne.

13. Dispositif de filtration selon l'une quelconque des revendications 1 à 11 pour filtrer de l'huile.
